(19) Europäisches Patentamt
European Patent Office
Office européen des brevets

(11) **EP 1 982 905 B1**

(12) **EUROPEAN PATENT SPECIFICATION**

(45) Date of publication and mention
of the grant of the patent:
**17.06.2009 Bulletin 2009/25**

(51) Int Cl.:
***B62D 61/04*** *(2006.01)*

(21) Application number: **07425239.6**

(22) Date of filing: **20.04.2007**

(54) **Electrically powered vehicle, having wheels arranged in a rhombus-like configuration**

Elektrisch angetriebenes Fahrzeug mit rhombisch-angeordneten Rädern

Véhicule propulsé électriquement avec roues à configuration en losange

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**22.10.2008 Bulletin 2008/43**

(73) Proprietor: **C.R.F. Società Consortile per Azioni 10043 - Orbassano (Torino) (IT)**

(72) Inventors:
• **Perlo, Piero,**
**C.R.F. Societa Consortile per Azioni**
**10043 Orbassano (Torino) (IT)**
• **Di Giusto, Nevio,**
**C.R.F. Societa Consortile per Azioni**
**10043 Orbassano (Torino) (IT)**
• **Ottella, Marco,**
**C.R.F. Societa Consortile per Azioni**
**10043 Orbassano (Torino) (IT)**

(74) Representative: **Notaro, Giancarlo**
**c/o Buzzi, Notaro & Antonielli d'Oulx**
**Via Maria Vittoria 18**
**10123 Torino (IT)**

(56) References cited:
WO-A-20/05021360        US-A- 3 828 876
US-A- 4 313 511         US-A1- 2007 151 777

## Description

The present invention relates to vehicles of the type having four wheels set at the vertices of a rhombus, and precisely a central front wheel, which is a direction wheel, a central rear wheel, and two side wheels having a common axle located in a position longitudinally intermediate between the axle of the front wheel and the axle of the rear wheel.

A vehicle as set forth in the preamble of claim 1 is known from US-A-4 313 511 and WO 2005/021360 A.

Vehicles of the type referred to above have been proposed and produced for a long time now, and were present particularly in the early days of the history of motor vehicles (see, for example, US-A-1 426 975). An interesting development of motor vehicles with wheels arranged in a rhomboidal configuration has also been proposed more recently by Prof. Alberto Morelli of the Politecnico di Torino (see GB-A-889 593 and US-A-3 828 876). The rhomboidal arrangement of the four wheels of the motor vehicle, in the case of the Morelli proposal, was adopted above all in order to enable use of a body having a substantially ovoid shape, also in plan view, so as to reduce the coefficient $C_x$ of aerodynamic resistance, without, on the other hand, entailing significant dimensions in a longitudinal direction. This constituted an evident advantage with respect to a motor vehicle with the traditional four-wheel arrangement, where the ovoid shape in plan view can be obtained only at the cost of a significant projection of the car body beyond the front wheels.

The known solution mentioned above did not find practical application, at least on a large scale, for a series of reasons, amongst which problems of dynamic stability of the vehicle during braking (as regards the solution proposed in the document No. GB-A-889593, where only the rear central wheel was a driving wheel) or problems of transmission of the power from the wheels to the ground, in the case of the solution illustrated in the document No. US-A- 3 828 876, where only the two side wheels were driving wheels.

Starting from the aforesaid known solution, the present invention is aimed, on the one hand, at taking up again and enhancing the advantages thereof and, on the other hand, at eliminating the drawbacks.

A further purpose of the invention is to provide a vehicle of the type specified above that will be particularly suitable for town traffic, that will involve an extremely low or even zero environmental impact, that will have reduced dimensions, such as to render it suited to driving in urban traffic and to parking in restricted spaces, and that, finally, will have a highly efficient drive system, as well as a coefficient of aerodynamic resistance that is considerably reduced.

According to its fundamental aspect, the invention presents **the features of claim 1**.

The combined adoption of a rhomboidal scheme for the arrangement of the four wheels of the motor vehicle and of seats arranged in line in the longitudinal central direction of the motor vehicle not only enables adoption of a body having a substantially ovoid shape, without entailing a dimension of the motor vehicle much greater than the distance between the axles of the front and rear wheels, but also enables a drastic reduction in the front section of the motor vehicle, and in particular the width of the motor vehicle with respect to its height, with the consequence that the coefficient $C_x$ can be extremely reduced as compared to the known vehicles mentioned above. At the same time, the adoption of electric motors directly associated to the central front wheel and to the central rear wheel for driving said wheels enables multiple advantages. On the one hand, the problems of instability in braking and of transmission of power to the ground, which are characteristic of the known solutions, are effectively solved. On the other hand, the electric motors thus positioned involve a distribution of masses that is optimal for the stability of the motor vehicle in any dynamic condition. In addition, the use of electric motors opens up the way to the possibility of obtaining regenerative braking via the motors themselves by causing the mechanical brakes to intervene only at a low speed, and consequently offers the advantage of using control systems that exploit the energy dissipated during braking.

According to a fundamental characteristic of the present invention, each of the following ratios:

- the ratio L/H between the length and the height of the motor vehicle,
- the ratio H/W between the height of the motor vehicle and the distance between the two side wheels,
- the ratio **AC/AB** between the distance between the axles of the front and rear wheels and the distance between the axle of the front wheel and the axle of the side wheels,

substantially corresponds, with a tolerance of more or less 10%, to the golden section:

$$\phi = \frac{1 + \sqrt{5}}{2} \, .$$

The adoption of said value for the aforesaid ratios, on the one hand, enables a vehicle body that is aesthetically harmonious to be obtained and, on the other hand, guarantees optimal results of stability and of drivability of the vehicle when curving.

As already mentioned, the arrangement in line of the seats moreover enables a very low coefficient $C_x$ to be achieved, in the region of 0.14-0.17. At the same time, the compact dimensions of the motor vehicle are accompanied by a dimension in height that is relatively large, which ensures an extremely high degree of comfort.

The above solutions, allied to the use of light materials, tyres with a low coefficient of friction, high-efficiency electric driving wheels, high-specific-energy and high-specific-power batteries and supercapacitors, and high-efficiency battery-charging systems ensure an efficiency of the overall energy chain, considering the total energy required starting from extraction of crude fossil fuel, to transportation, to refinement and subsequent transformations, up to final transformation into useful kinetic energy, the so-called "well-to-wheel" efficiency, that is higher than the typical one of traditional battery or fuel-cell electric vehicles (typically around 25%) and far higher than that of vehicles with internal-combustion engines or hybrid vehicles (typically less than 20-22%).

Further characteristics and advantages of the invention will emerge from the ensuing description with reference to the annexed plates of drawings, which are provided purely by way of non-limiting example and in which:

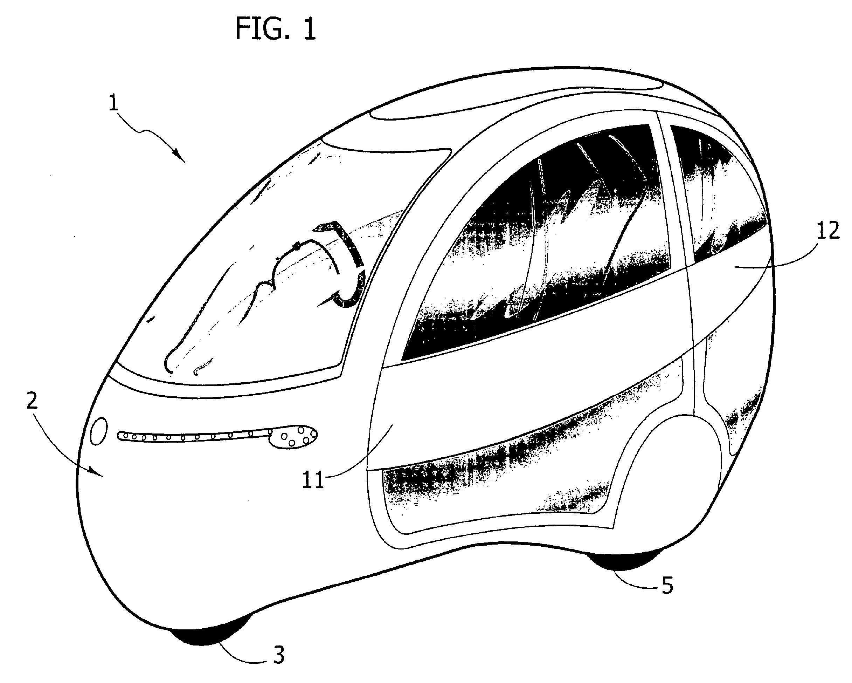

- Figure 1 is a perspective view of a preferred embodiment of the motor vehicle according to the invention;
- Figure 2 is a further perspective view of the motor vehicle of Figure 1;
- Figure 3 is a view in side elevation of the motor vehicle of Figures 1 and 2;

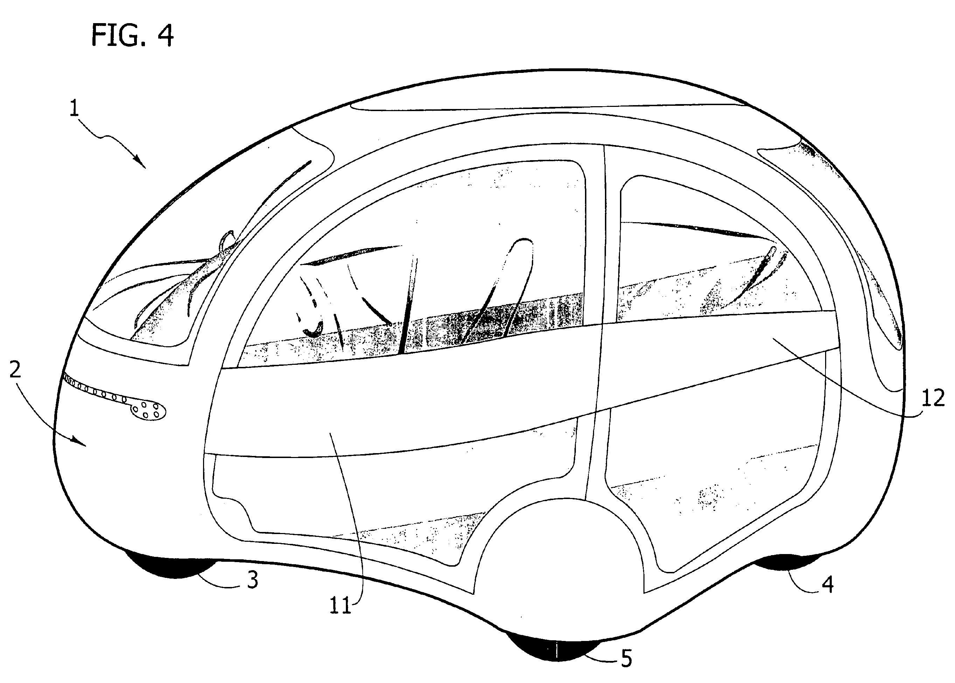

- Figure 4 is a side and top view of the motor vehicle of Figures 1-3;
- Figure 5 is a side view of the motor vehicle with the side doors open;
- Figure 6 is a perspective view and at an enlarged scale of the driving seat;
- Figures 7 and 8 illustrate a diagram in side view and a diagram in top-plan view, respectively, of the motor vehicle according to the invention;
- Figure 9 is a schematic side view that shows the displacement of the backrest of the front seat used to facilitate access to the rear seat;

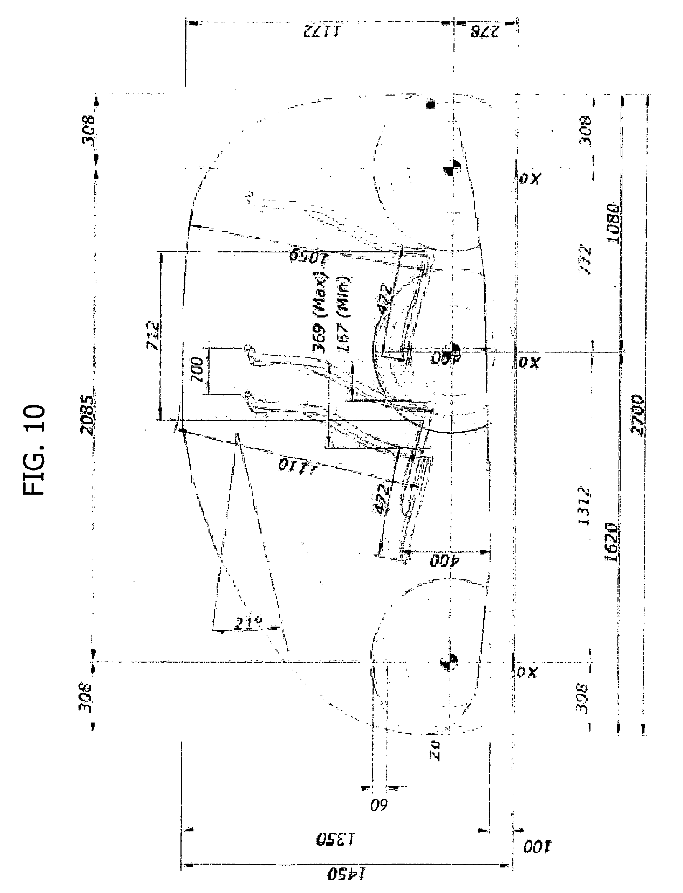

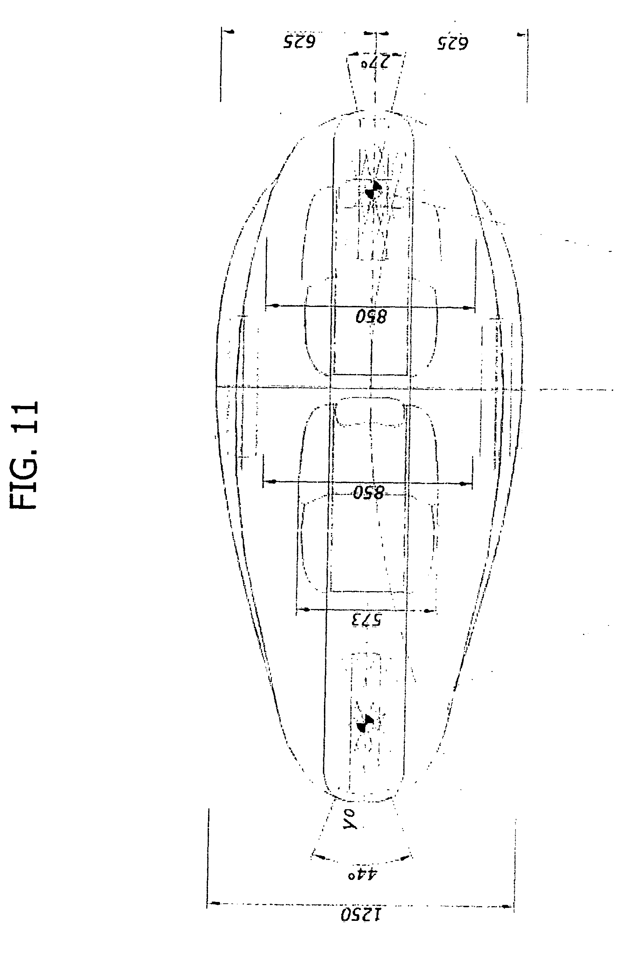

- Figures 10 and 11 illustrate the same diagrams as those of Figures 7, 8, but also give the dimensions of a concrete example of embodiment; and
- Figures 12-17 are diagrams that illustrate the dynamic behaviour of the vehicle according to the invention.

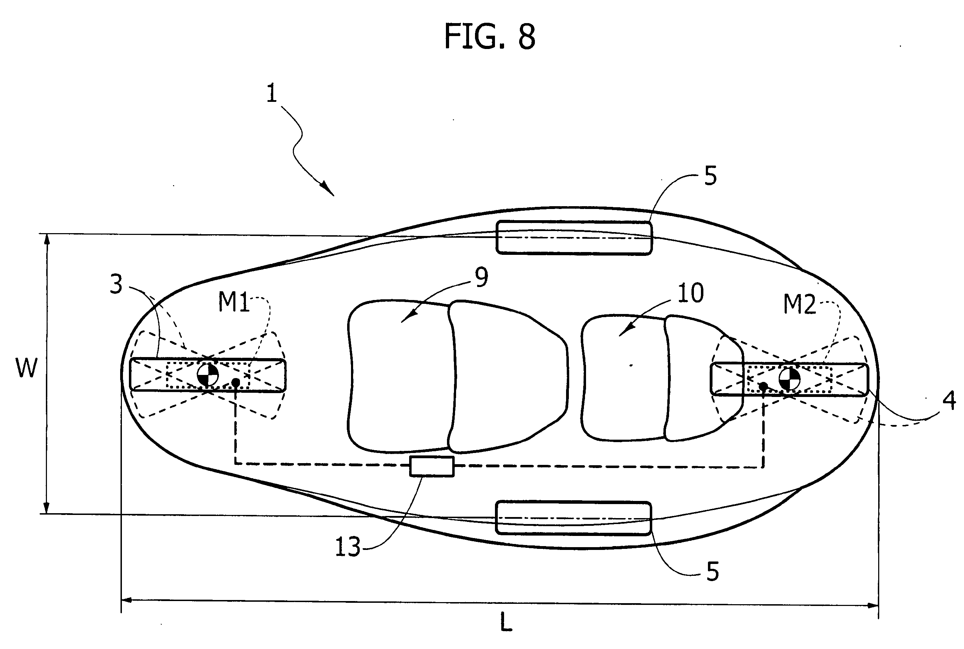

With reference to the drawings, number 1 designates as a whole an electrically powered vehicle, particularly designed for town traffic, having a body 2 of a substantially ovoid shape, mounted on four wheels arranged at the vertices of a rhombus (see Figure 8): a central front wheel 3, which is a direction wheel, a central rear wheel 4, which in the preferred example of embodiment illustrated herein is also a direction wheel, and two side wheels 5 having a common axle 6 located in a position longitudinally intermediate between the axis 7 of the central front wheel 3 and the axis 8 of the rear wheel 4.

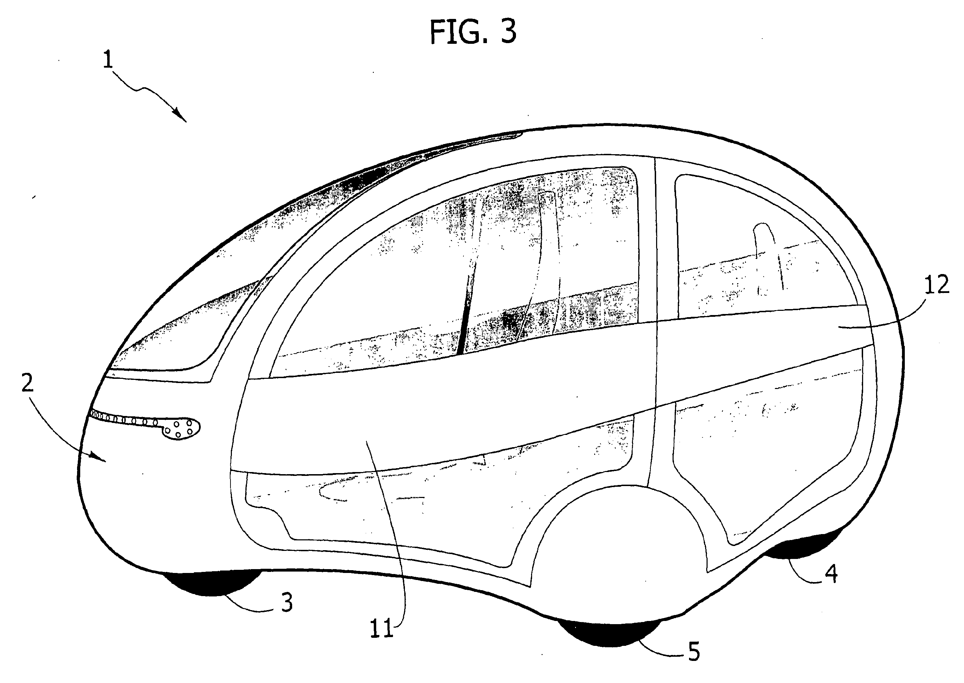

As may be seen in the drawings, the vehicle body 2 has an ovoid shape both in side view (Figure 3) and in plan view. Said result is obtained by limiting to a minimum the longitudinal dimension of the motor vehicle, thanks to the rhomboidal arrangement of the four wheels.

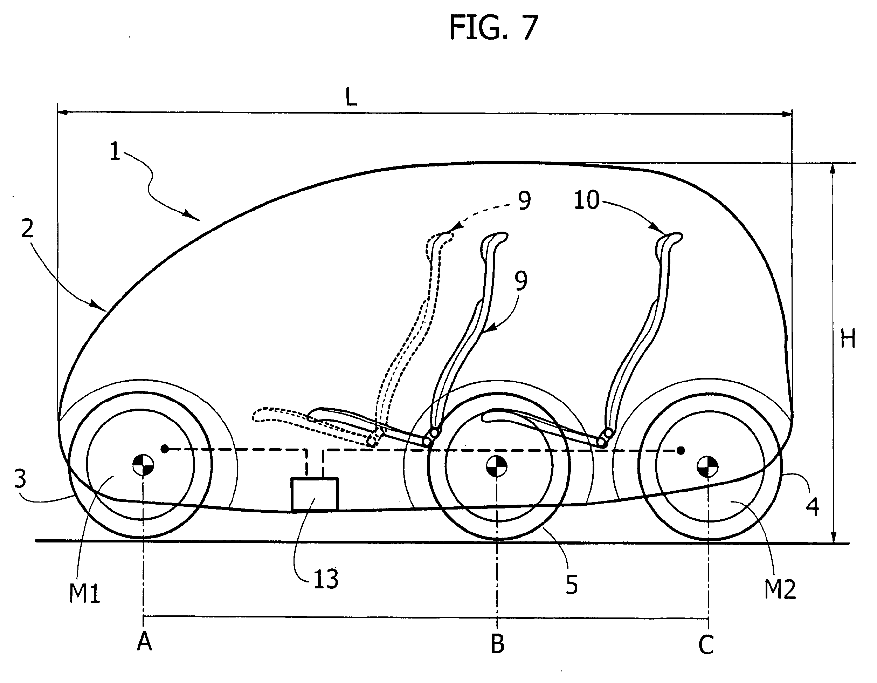

The motor vehicle is moreover characterized in that it presents a seat for the driver and a seat for the passenger arranged in line, one behind the other, in the longitudinal direction of the motor vehicle. Thanks to said characteristic, the width W of the motor vehicle, and consequently the front section of the motor vehicle, can be contained to a minimum, even though the height H of the motor vehicle (see Figure 7) is relatively large so as to guarantee a high degree of comfort both for the driver and for the passenger. The reduced value of the front section of the motor vehicle produces a first immediate advantage, allied to the ovoid or droplike shape of the body, of an extremely reduced coefficient of aerodynamic resistance, in the region of 0.14-0.17. The reduced value of the front section of the motor vehicle produces a second immediate advantage that is crucial for the drivability of the vehicle when curving. In effect, with the arrangement in tandem fashion, which also ensures a high degree of comfort, a maximum width W smaller than 130 cm can readily be chosen, and all the drawbacks of drivability of the rhomboidal configuration with seats set alongside one another can in this way be overcome.

Of course, not ruled out either is the possibility of adopting a single central seat just for the driver without any passenger seats.

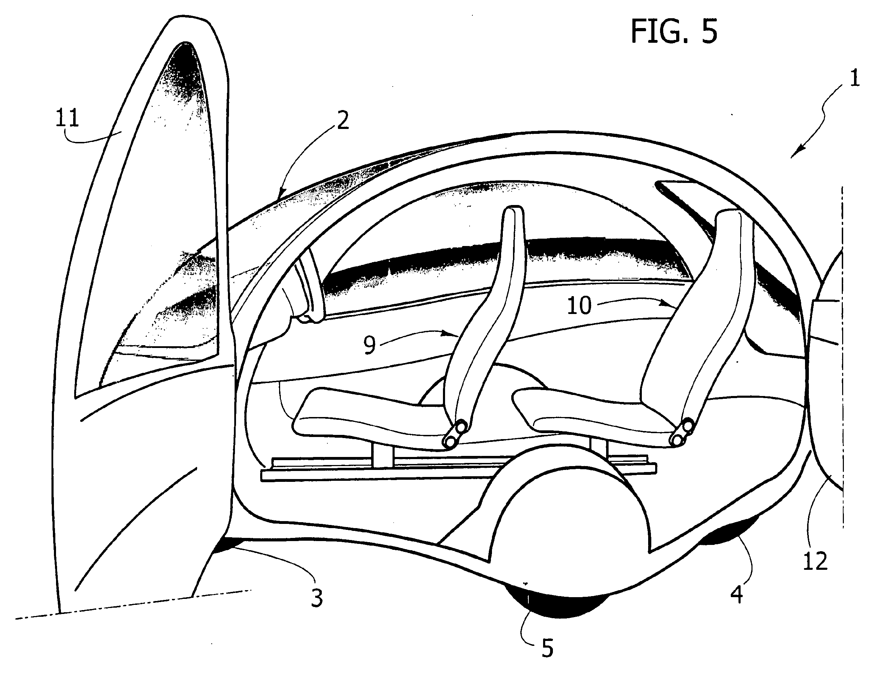

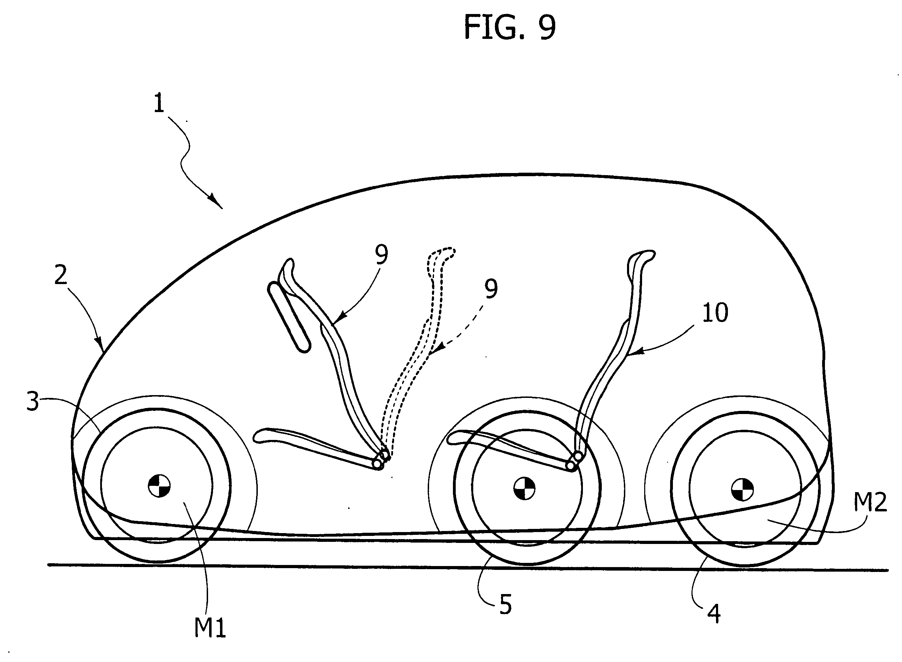

Figure 5 shows the front seat 9 for the driver and the rear seat 10 for the passenger. The backrest of the seat 9 can be knocked down forwards (Figure 9) to facilitate access to the rear seat. In the case of the example illustrated in Figure 5, said access is in any case considerably facilitated owing to the fact that the motor vehicle, thanks to the ovoid structure of the body, is without the so-called upright "B" and has on each side a front side door 11 and a rear side door 12, hinged, respectively, to the front edge and to the rear edge of an ample compartment for getting in and out, corresponding substantially as regards its width to the entire passenger compartment of the motor vehicle. Of course, said characteristics, which are proper to the embodiment illustrated herein purely by way of example, in no way limit the sphere of protection of the present invention, which is in any case applicable, in its general principles, also to motor vehicles having a different structure and conformation.

According to a further fundamental characteristic of the invention, both the front and rear wheels 3, 4 are driving wheels, whilst the two side wheels 5 are not driving wheels. Preferably, moreover, the wheels 3, 4 are powered by electric motors M1, M2 (Figure 8) directly associated to said wheels, according to the so-called "hub-motor" or "in-wheel-motor" technique, which envisages provision of an electric motor directly in the wheel hub. Alternative solutions are, however, possible. In particular, it would also be possible to envisage an electric motor coaxial with the axles of the front and rear wheels, but set on the outside thereof, or else again to provide two electric motors for each wheel, arranged coaxially on the two sides of the wheel. Said arrangement is possible in the case of the vehicle according to the invention thanks to the fact that both the front central wheel and the rear central wheel are driving wheels, so that both sides of each of said wheels are readily accessible, unlike what occurs for the wheels of a motor vehicle of a traditional type. In the proposed configuration, there may then be used both electric motors with axial magnetic flux or with transverse magnetic flux and conventional electric motors (with radial magnetic flux), whether of the external-rotor type or of the internal-rotor type. In addition, for each wheel, two opposed motors may be used, which can present different characteristics, e.g., of torque, power, and speed, in such a way, for example, that one system constituted by a motor and an electronic power actuation ensures greater efficiency at low speeds, whilst the other system ensures greater efficiency at high speeds, for example, by means of an appropriate choice of the number of magnetic poles, of the basic speed of rotation, and of the defluxing range of the electric machine.

A similar choice is theoretically possible also for each of the two driving wheels, even in the case where each of them is actuated by just one electric machine, for example, with one of the two driving wheels designed for working with high efficiency at low speeds, and the other with high efficiency at a high speed in such a way as to be able to pre-arrange the electronic control system with a strategy designed to maximize the overall vehicle efficiency over a wide range of torque-speed values.

As illustrated schematically in Figure 8, the electric motors M1 and M2 associated to the two central, front, and rear, wheels 3, 4 are controlled by an electronic control system 13 according to a pre-set logic, and also in a differentiated way from one another, as will emerge in greater detail from what follows. The electronic control system 13 can be pre-arranged, in a way in itself known, for controlling electrical braking of the motors M1 and M2. It moreover acts as controller means for establishing the flow of energy dissipated during braking to the array of the accumulator pack. Of course, the wheels of the motor vehicle (preferably the front and rear wheels, but also, alternatively, the side ones 5) can be moreover provided with mechanical brakes for braking at a low speed.

As already mentioned above, the front wheel 3 is a direction wheel, as also preferably is the rear wheel 4, in order to reduce to a minimum any transverse skidding of the tyres when curving, as will be discussed in greater detail in what follows.

In the preferred embodiment of the invention illustrated herein, a further fundamental characteristic lies in the fact that at least one, but preferably each of the following ratios:

- the ratio L/H between the length and the height of the motor vehicle (see Figure 8),
- the ratio H/W between the height and the distance between the side wheels 5 of the motor vehicle, and
- the ratio AB/AC between the distance between the axles of the front and rear wheels and the distance between the axle of the front wheel and the axle of the side wheels,

corresponds, with a tolerance of more or less 10%, to the golden section:

$$\phi = \frac{1 + \sqrt{5}}{2}\;.$$

The studies conducted by the present applicant in this connection have demonstrated that the adoption of said value for the aforesaid dimensional ratios enables, on the one hand, provision of a body having an aesthetically harmonious ovoid shape, and, on the other hand, high characteristics of drivability and stability of the motor vehicle in the dynamic conditions to be obtained.

The electric motors of the motor vehicle are supplied by accumulators constituted by an array of batteries (not illustrated), and by an array of supercapacitors, alternatively and preferably by an array of high-power-density and high-energy-density superbatteries and possibly by range extenders for increasing the vehicle's range. Each of the driving wheels will preferably have a system of accumulation independent of the other driving wheel or wheels. As mentioned, the use of electric motors directly connected to the wheels enables implementation of regenerative braking with almost complete recovery of the kinetic energy of the vehicle during braking. Acceleration and braking are preferably managed by the supercapacitors, but in the case of prolonged or particularly sharp braking, the electronic system of sharing can direct part of the recovered energy to the array of batteries, or else, in the case where also these are completely charged, to a resistive electrical dissipator. Said system moreover enables reuse, during subsequent accelerations, of a fair amount of the energy recovered (typically over 85%), thus reducing the amount of energy required for completing a certain stretch. It is, in fact, known how in towns the levels of consumption of motor vehicles with internal-combustion engines are high on account of the continuous and repetitive dissipation of the kinetic energy at each crossroads, with consequent acceleration each time the vehicle has to pick up again. As already mentioned, in order to reduce overall dimensions and prevent any energy losses, a very advantageous solution is the so-called "in-wheel-motor" or "hub-motor" solution. Said solution envisages installation of the motor in the wheel and a direct contact between the tyre and the rotor of the motor, thus avoiding the need to use transmission gears and the losses deriving therefrom. The use of the hub-motor in the configuration proposed herein moreover facilitates design from the standpoint of balancing of the vehicle, preventing the need to have available different elements alongside the wheel instead of on the axis of symmetry of the vehicle. The preferred type of hub-motor is the so-called axial-flux one with double disk of permanent magnets, having a high efficiency, high specific torque, and minimum encumbrance on the axis of rotation of the wheel. Given the particular configuration of the vehicle, also other configurations of electric machine are possible, for example, transverse-flux or else radial-flux ones. A possible variant uses, for example, reluctance electric machines re-phased by means of permanent magnets, a configuration that ensures high specific torque and ample defluxing range and consequently contained dimensions of the system of electronic power actuation.

As also already discussed above, a further aspect of determining importance in reducing the levels of consumption is represented by the aerodynamic characteristics of the motor vehicle. The power used to overcome the aerodynamic resistances is one of the key factors in the battle against inefficiency. The rhomboidal solution for the arrangement of the wheels, allied to the arrangement of the seats in line, enables minimum resistance to the air when the vehicle is travelling.

As already mentioned, in the preferred solution of embodiment, also the rear wheel is equipped with a steering system, of an active or passive type. Said configuration enables further reduction of the tyre-road micro-skidding as a result of a reduction of the angles of drift when curving and moreover enables a less burdensome mode of travel in terms of energy expenditure.

Since both the front wheel and the rear wheel are powered, the majority of the weight of the vehicle (around 70-80%) is on these wheels. The reduced cross section of the side wheels, together with the reduced weight of the vehicle, enables reduction in the energy losses due to the wheels rolling on the road surface. The preferred configuration consists of front and rear wheels having diameters and cross sections larger than those of the side wheels. The side wheels have the task of keeping the vehicle balanced when it is stationary and of functioning as stabilizer when the vehicle is travelling at a low speed and is curving in so far as it is desirable that the vehicle should present characteristics of drivability more similar to a motor vehicle than to a motorcycle. This stabilizing function can be assisted by providing active-suspension systems, with an active control of roll. The proposed configuration for the vehicle according to the invention consists of two seats in line with a reduced width in order to meet, as has been seen, aerodynamic requirements and requirements of drivability. The height of the vehicle is preferably such as to enable the occupants to get in and out with extreme ease, and in this way it will be comparable to that of conventional motor vehicles. There are, however, possible configurations of contained height with more reclined positions for the occupants. In the preferred configuration, the vehicle is narrow (for aerodynamic requirements) and high (for requirements of comfort). The basic configuration envisages adjustment of the stiffness of the suspensions of the four wheels, but likewise possible are particular configurations that envisage the introduction of active or semi-active suspensions, and/or active-safety systems, which act in feedback with an inertial micro-system of measurement of pitch, roll, and yaw.

In order to guarantee dynamic stability of the vehicle, it is necessary to keep the centre of gravity in a position as low as possible. The presence of the driver and of the passenger tends in any case to raise the centre of gravity, but human beings may be modelled as active systems that react to the accelerations and forces to which they are subjected when travelling. Instead, the accumulator assembly, the chassis, and the various systems installed on board are located at the level of the wheels, so as to contribute to the stability of the vehicle, concentrating the masses close to the ground, possibly in such a way as to set the centre of gravity of the vehicle below the level of the wheel axles. Preferably associated to each wheel is its own array of accumulators. Consequently, the driving wheel and the array of accumulators constitute an independent module. The two arrays of accumulators are, however, in communication with an electric power bus and are set in relation by the processor that manages the energy flows.

As also mentioned above, the two electric motors provided for actuation of the front wheel and of the rear wheel can be pre-arranged to develop levels of torque and power that differ independently of one another. In the case of acceleration, as a result of the force of inertia, there will be a variation of normal load on the wheels, an effect of pitch of the vehicle, and an increase of load on the rear wheels. Via an independent adjustment of the motors, the rear wheel can develop a higher torque, without creating problems of adherence. This freedom of management becomes even more advantageous when braking. In fact, when braking it is easier to exceed the limit of adherence of the tyres, and hence to a reduction of load on the rear tyre it is possible to respond with a reduction of the braking torque applied by the rear motor, whilst it is possible, instead, to increase the value of the braking torque on the front wheel. Torque sharing during acceleration and braking can be programmed simply on the basis of the information regarding the characteristics of the vehicle and by providing a longitudinal accelerometer on the vehicle itself, designed to issue at output a signal indicating the amount of the force of inertia. An advanced version of the system enables the beneficial effects of the ABS system to be recreated by acting directly on the motors.

As also already indicated above, the association of an electric motor to a central wheel enables access to the motor from either side as well as to the tyre, and moreover enables implementation of a steering system set above, rather than at the side of, the wheel, as occurs instead in traditional vehicles. Said solution increases the overall dimensions in a vertical direction, but facilitates design of the component thanks to the separation between the steering components and the components for driving of the wheel.

As already mentioned, in the case where the vehicle is equipped with active suspensions (a device of this type forms the subject of the European patent application No. EP 07425177.8, filed in the name of the present applicant), it is possible to compensate for the effects of pitch and roll of the vehicle. In particular in conditions of acceleration and braking, the manoeuvres can thus be performed without any significant variation in the orientation of the body. Likewise, when curving the rolling torque is compensated for by the suspensions of the side wheels. In order to reduce the energy expenditure, the active suspensions on the side wheels can be replaced with an anti-roll bar. However, the use of active suspensions or anti-roll bars accentuates the effect of imbalance of the loads on the wheels. For example, when curving, the use of an anti-roll system, in order to develop a torque countering the roll itself, increases the normal load acting on the most loaded wheel whereas it reduces it further on the unloaded wheel, with the risk of reaching first the condition of loss of adherence of the wheel that is on the inside of the bend. By exploiting the aforesaid suspensions and possible inclinometers or inertial platforms, it is possible, via active systems, to intervene, correct, and stabilize the pitch and roll of the vehicle.

As already mentioned, the steering system preferably envisages not only steering of the front wheel, but also of the rear one. As in a traditional vehicle, the front wheel must turn by of an angle greater than the desired path so that the angle of steering of the rear wheel can be smaller than that of the front wheel and smaller than the kinematic angle. This choice is linked to the difficulties of envisaging the exact angle to be applied to the rear wheel, at the same time achieving a reduction in the losses due to friction when curving, which are linked to the deformations of the tyres. In addition, if the kinematic angle is not exceeded, it is possible to avoid the situation where the rear axle functions as steering element and the driver perceives a slipping or skidding of the rear part of the vehicle.

The mechanisms of steering that can be used are different. As first distinctive factor, it is possible to consider the steering of the rear wheel as passive or active. In the passive case, the system can be modelled as a torsion spring applied to the axis of rotation of the rear wheel. The conditions of adherence when curving will impose a certain angle on the spring. Disadvantages of this solution are linked to problems of resonance typical of any mass-spring-damping system. In the case of active steering on the rear axle different solutions are available, as for front-axle steering.

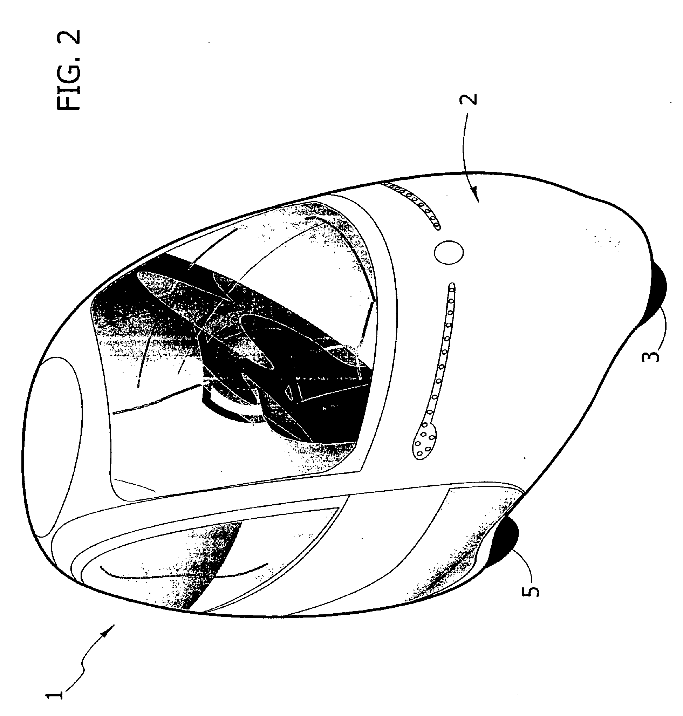

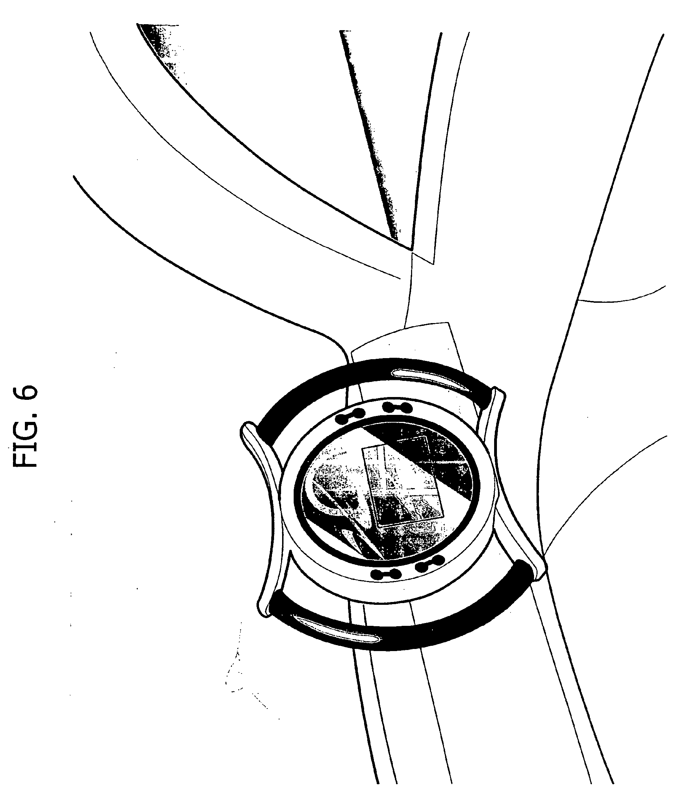

The mechanical system, with steering column, enables avoidance of the use of energy coming from batteries or other sources and ensures a direct mechanical connection between the steering wheel and the wheel of the vehicle. This system is consequently the simplest and is the one preferred for the front wheel. A system of this type may be applied easily to the front wheel, but tends to become cumbersome and heavy if applied to the rear wheel. A hydraulic system is less invasive than a mechanical one but no longer ensures direct connection between the steering wheel and the wheel of the vehicle. It can, instead, be easily applied to the rear axle. Passing now to solutions of an electronic type, it is possible to envisage a steer-by-wire system, even though said system obviously requires electric power, which in the case of an electric vehicle based upon extremely low consumption is not negligible. A further solution rendered possible and advantageous by the proposed configuration is that of a system for controlling steering using Bowden cables. Figures 2 and 6 show two possible solutions for supporting the steering-wheel that are compatible with a Bowden-cable transmission.

As also mentioned previously, by means of electric motors it is possible to obtain regenerative braking. It is preferable, however, to envisage mechanical brakes for braking at a low speed in so far as, in said conditions, it may be difficult to manage electric motors continuously so as to develop an adequate resistant torque. Preferably, mechanical brakes are associated to one or both of the two, front and rear, wheels. Furthermore, said solution ensures being able to use the traditional braking system for stopping the vehicle in the event of failure of the electrical system.

As has been seen, the preferred embodiment of the invention envisages electrical powering alone of the vehicle by means of in-wheel motors or else via a direct connection between each electric motor and the respective driving wheel. However, not ruled out either is the possibility of providing transmissions of a different type, for example, hybrid systems that also include a heat engine. The type preferred is that of the purely electric vehicle, where the heat engine of the Stirling type, or of the internal-combustion type, or a methanol or hydrogen mini-fuel-cell, or again a thermoelectric converter are used as range extenders for continuous recharging of the accumulators.

Moreover emphasized is what was mentioned above regarding the extreme advantage of adopting, for a series of specific dimensional ratios, the value of the golden section, with a tolerance of more or less 10%. Said value is in particular to be applied to the ratio between the distance between the front and rear wheels and the distance between the front wheel and the side wheels. With said solution, the axle of the two side wheels can be displaced to approximately two thirds of the length of the vehicle, thus positioning it underneath the occupants and raising the intrinsic safety level of the vehicle. In fact, the presence of the axle of the side wheels provides added safety in the case of lateral impact.

As is evident from the foregoing description, the vehicle according to the invention is characterized by a series of evident advantages: zero pollutant emissions, compact dimensions suited to driving and parking in towns, excellent aerodynamic characteristics, with extremely low $C_x$, consequent high efficiency, thanks also to the possibility of recovery of the kinetic energy of the vehicle during braking, via the electric motors associated to the front wheel and to the rear wheel, consequent low energy consumption, and high vehicle range.

For example, a vehicle having an empty weight of approximately 170-190 kg, comprising two in-wheel motors with a power of 2000 W and comprising 50 kg of accumulators, is able to have a range at full load of over four hours in a mixed urban and extra-urban driving cycle (ECE or UDC-EUDC cycle). In addition, the maximum speed of the vehicle can exceed 120 km/h.

Regenerative braking enabled by in-wheel motors, typically with an efficiency of 93%-97%, enables recovery of the majority of the energy used in the accelerations, and in this way the weight of the vehicle becomes of little importance. With regenerative braking, the energy consumption is hence due prevalently to the portions of the cycles at constant speed, and the main contribution thereto is the aerodynamics and the action of rolling of the wheels on the road surface.

The well-to-wheel efficiency of this vehicle can reach 30-35% in the case where the electrical energy used for recharging the batteries comes from non-renewable sources and can exceed 70% in the case where electrical energy generated with renewable sources (for example, solar or wind power) is used.

In addition, also possible is the provision of solar cells integrated in the bodywork and solar cells of the semitransparent flexible-film type integrated in the windows for recharging the accumulators.

Once again in the case of the preferred embodiment, the roof of the motor vehicle has an adaptive structure that is transpirant to air but water-repellent, comprising a plurality of controlled-opening pores, for example, electrically or thermostatically actuated ones. The electrostrictive materials or preferably materials of a thermal-self-expansion type are able to maximize the flow of air, and hence minimize the greenhouse effect, without letting rain get in.

Different variants are possible other than the preferred example of embodiment that has been described above. The steering is preferably manual, but not ruled out either is the provision of a device designed to assist steering of the front wheel of an electrical, electromechanical, or pneumatic type. The doors can be provided on both sides of the vehicle or on just one side. It is also possible to provide a side door that slides open upwards, to reduce the space necessary for parking.

Again, in the case of the preferred embodiment, the vehicle has a main chassis made of composite material or aluminium box section, and a bodywork made of polycarbonate or nanocomposite material of the type containing a percentage of fillers of montmorillonite material.

In an example of embodiment (not illustrated), the vehicle moreover has, for the front and rear lights, a plurality of light sources arranged according to a logarithmic spiral of the Fibonacci-series type.

Preferably, the arrays of accumulators are coupled to an electronic unit for fast recharging from the electric-power mains supply via local accumulation racks with high power-density elements, such as supercapacitors, and/or flywheels.

As already mentioned, connected to the electric motors M1, M2 associated to the front and rear wheels 3, 4 are means for supply with renewable sources, such as wind-power, or photovoltaic, or thermoelectric sources. For example, the surface of the bodywork can be coated with photovoltaic solar cells or solar cells of the thermoelectric type, whilst semitransparent photovoltaic films can be integrated in the windows.

Moreover preferably provided are feedback mechanisms for actuation, by means of said active suspensions, of the balancing of the load on the side wheels, so as to stabilize the vehicle on bends and in the case of gusts of side wind.

In one embodiment, the front and rear wheels 3, 4 can be steered through 90°, and the side wheels can be raised for parking in restricted areas.

Preferably, moreover, the vehicle has a width sufficiently small to enable an action of balancing by the driver by movement of his body, as in the case of a two-wheeled vehicle.

It is also possible to envisage braking means including a resistive element for dissipation of the electrical energy regenerated by the in-wheel motors.

Described in what follows is the dynamic behaviour of the vehicle according to the invention.

Considering a turn to the left at constant speed, the vector sum of the forces exchanged between the tyres and the ground must balance the centrifugal force. The direction of the forces is known and lies on the line joining the centre of instantaneous rotation and the centre of pressure of the tyre. Via an iterative process that is based upon these premises, it is possible to identify the position of the centre of instantaneous rotation and the angles of drift of the tyres.

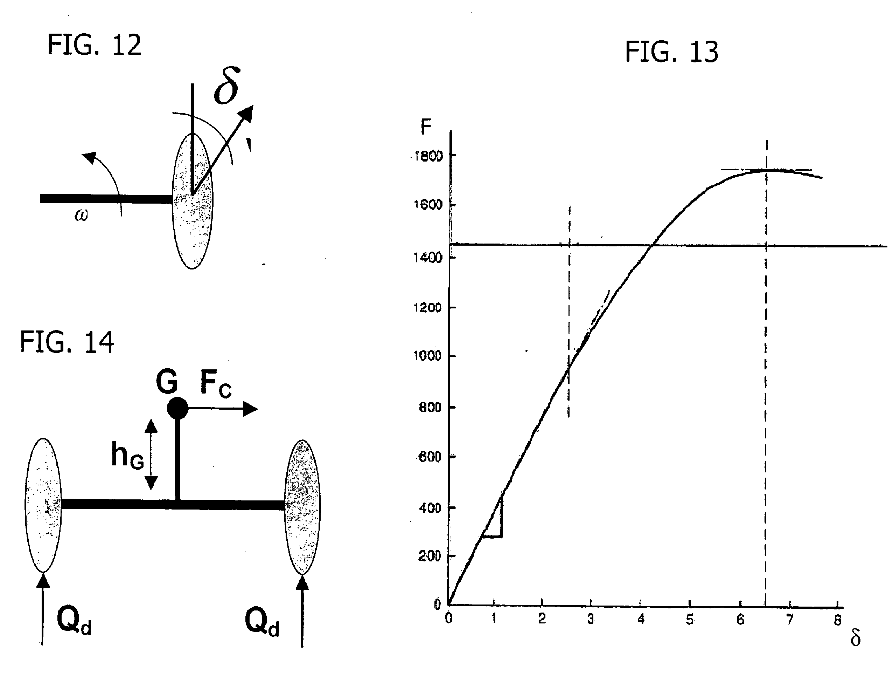

The drift angle (Figure 12) is the angle formed between the real direction of motion and the plane of symmetry of the tyre. Such a problem can be solved when the curves of tangential force admissible by the tyre as a function of the normal load on the wheel and of the drift angle (Figure 13) are known.

When curving, as a result of the centrifugal force, a vehicle is subject to two effects: variation of the distribution of the normal loads and variation of the tangential forces on the wheels.

The variation of the normal loads envisages two cases (Figure 14):

- both of the side wheels in contact; the load increases on the outer wheel whilst it decreases on the inner wheel; and
- just one side wheel in contact, namely the outer one, when the reduction of the load is such as to offset the static load applied to the inner wheel.

In Figure 14, the central wheels are not represented in so far as no variation occurs of the normal load applied as a result of the centrifugal force. The quantities $Q_{ds}$ and $Q_{dd}$ are, respectively, the variations of load and do not include the static loads. If the wheels are at a distance c apart, we have

$$F_C \cdot h_G = Q_{dd} \cdot c = -Q_{ds} \cdot c \qquad (1)$$

If $F_C$ is the product between the global load of the vehicle and the coefficient of overall centripetal adherence of the vehicle, we have

$$F_C = Q_{tot} \cdot A_c \qquad (2)$$

$$A_c = \frac{Q_S \cdot c}{Q_{tot} \cdot h_G}$$

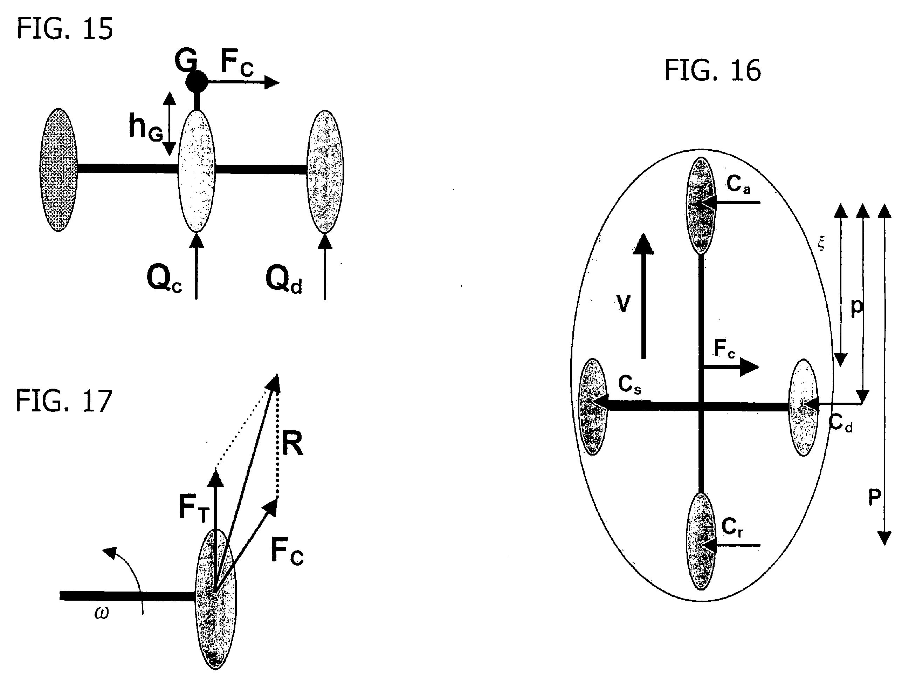

It follows that there will exist a value of $A_c$ such that the variation of load on the outer wheel balances the static load $Q_S$, and consequently the normal force acting on the tyre is zero, and the tangential force that can develop will also be zero (Figure 13). In the condition of loss of adherence (Figure 15), the central wheels will intervene in collaboration with the outer one to compensate for the effect of the centrifugal force.

$$F_C \cdot h_G = Q_{dd} \cdot \frac{c}{2} = -Q_{cd} \cdot \frac{c}{2} \qquad (2)$$

It is interesting to note how, in the passage between the two configurations, there is present a factor 2 in the coefficient of increase in the normal load acting on the tyres. This represents a discontinuity of the physicomathematical model in the passage between the two configurations. In actual fact, discontinuities are not allowed, and the elastic components of the system (tyres and suspensions) will contribute to a gradual (and continuous) transfer of forces from the inner side wheel to the central ones.

With reference to Figure 16, the variation of the tangential forces envisages a number of cases:

-    the typical case with four wheels in a condition of adherence

$$F_C \cdot \xi = (C_S + C_D) \cdot p + C_R \cdot P \qquad (3)$$

-    three wheels in conditions of adherence equal to the second condition expressed above ($C_S$=0):

$$F_C \cdot \xi = (0 + C_D) \cdot p + C_R \cdot P \qquad (4)$$

-    rear wheel at the limit of adherence, and front wheel and outer side wheel in normal working conditions:

$$F_C \cdot \xi = (0 + C_D) \cdot p + 0.8 Q_R \cdot P \qquad (5)$$

As already mentioned above, from the considerations on the dynamic behaviour of the vehicle it is necessary, in order to improve stability, to design the vehicle in such a way as to lower the centre of gravity as much as possible. The presence of the driver and passenger will tend, in any case, to raise the centre of gravity of the vehicle, but human beings may be modelled as active systems that react to accelerations and forces to which they subjected when travelling. Instead, the battery assembly, the chassis, and the various systems installed on board must find accommodation at the level of the wheels so as to contribute to the stability of the vehicle by concentrating the masses close to the ground.

In the vehicle according to the invention, the driving wheels are the two central wheels. As a function of the load $Q$ applied on a wheel, it is possible to identify the maximum modulus that the force that can be discharged to the ground by the wheel can have (Figure 13). The side wheels have lighter suspensions and hence a smaller fraction of weight and a smaller modulus of the force transmitted to the ground. In the case of the vehicle proposed by Prof. Morelli, in the version in which the driving wheels are the two side wheels, on bends said side wheels are subjected to two forces (Figure 17), namely:

-    $F_T$ necessary for accelerating and braking but also for maintaining the vehicle at a constant speed (resultant of the driving or braking torque); and
-    Fc necessary for offsetting the centrifugal force and keeping the vehicle on its path.

The resultant R of the forces is the vector that the tyre exchanges with the ground, and the corresponding modulus is given by

$$R = \sqrt{F_C^2 + F_T^2} \qquad (6)$$

The central wheels, i.e., the ones with greater normal load and hence greater force transmissible to the ground, are subject only to the force Fc. In the case of the present invention, the fact of having transferred, thanks to the electric motors, the driving action onto both of the central wheels enables use of the side tyres for compensation alone of the centrifugal force, whilst the central wheels are certainly subject to the combination of centrifugal and driving forces, but can count upon a greater weight and hence upon the possibility of exerting forces of greater magnitude on the ground.

Most of the weight is on the central wheels; consequently, the preferred configuration envisages side wheels of reduced dimensions to reduce the energy losses linked to rolling of the wheels on the road surface and to the drift angle. It is these wheels that have the function of stabilization and road-holding on bends.

Of course, without prejudice to the principle of the invention, the details of construction and the embodiments may vary widely with respect to what is described and illustrated herein purely by way of example, without thereby departing from the scope of the present invention as defined by the appended claims.

**Claims**

1. A vehicle with four wheels set at the vertices of a rhombus, namely a central front wheel (3), which is a direction wheel, a central rear wheel (4), and two side wheels having a common axle (6) located in a position longitudinally intermediate between the axles (7, 8) of the front and rear wheels (3, 4) wherein the combination of the following further characteristics is provided:

   - the front wheel (3) and/or the rear wheel (4) are driving wheels,
   - driving of the front and rear wheels (3, 4) is obtained by means of respective electric motors (M1, M2) directly associated to the front and rear wheels (3, 4),
   - the vehicle is provided with one or more seats (9.10) arranged in line in the longitudinal central direction of the vehicle,

   **characterized in that** the ratio L/H between the length and the height of the motor vehicle, the ratio H/W between the height of the vehicle and the distance between the two side wheels (5), and the ratio AC/AB between the distance between the axle of the front and the axle of the rear wheel (3, 4) and the distance between the axle of the front wheel (3) and the axle of the side wheels (5) are all substantially equal to the golden section:

$$\phi = \frac{1+\sqrt{5}}{2}$$

   with a tolerance of ± 10%.

2. The vehicle according to claim 1, **characterized in that**, thanks to the arrangement of the seats in tandem fashion, it has a maximum width smaller than 130 cm, which enables a high degree of comfort to be achieved and the drawbacks of drivability when curving proper to vehicles with wheels set in a rhomboidal configuration having a width greater than 130 cm to be overcome.

3. The vehicle according to Claim 1, **characterized in that** associated to each of the aforesaid front and rear wheels (3, 4) is an electric motor of the in-wheel-motor type.

4. The vehicle according to Claim 1, **characterized in that** associated to each of the front and rear wheels (3, 4) are two coaxial electric motors, arranged at the two sides of the wheel.

5. The vehicle according to Claim 1, **characterized in that** the electric motors (M1, M2) associated to the front and rear wheels (3, 4) are controlled by an electronic control system (13) designed to control regenerative braking of said motors, with recovery of the kinetic energy of the vehicle during braking.

6. The vehicle according to Claim 1, **characterized in that** also the rear wheel (4) is a direction wheel.

7. The vehicle according to Claim 6, **characterized in that** the rear direction wheel (4) is controlled by an active-steering system.

8. The vehicle according to Claim 6, **characterized in that** the rear direction wheel (4) is equipped with a passive-steering system.

9. The vehicle according to Claim 1, **characterized in that** the front direction wheel (3) is controlled by a steering system of a mechanical type.

10. The vehicle according to Claim 9, **characterized in that** the front direction wheel (3) is controlled by a mechanical system with steering column.

11. The vehicle according to Claim 9, **characterized in that** the front direction wheel (3) is controlled by a mechanical system with Bowden cables.

12. The vehicle according to Claim 1, **characterized in that** the front direction wheel (3) is controlled by a steering system of the steer-by-wire type.

13. The vehicle according to Claim 1, **characterized in that** it is provided with active suspensions, with active control of the movements of pitch and roll of the body of the vehicle.

14. The vehicle according to Claim 13, **characterized in that** it is provided with a system of inertial control, for active control of the movements of pitch and roll of the body of the vehicle.

15. The vehicle according to Claim 1, **characterized in that** it is provided with a hybrid drive also including a heat engine, of the type in which said engine is also connected to one or more wheels, or else of the type in which the heat engine is used only for charging the battery for supplying the electric motors.

16. The vehicle according to Claim 4, **characterized in that** it is moreover provided with mechanical brakes, and **in that** the aforesaid control system is designed to enable said brakes below a threshold value of the speed of the motor vehicle.

17. The vehicle according to Claim 16, **characterized in that** mechanical brakes are associated to the side wheels (5).

18. The vehicle according to Claim 16 or Claim 17, **characterized in that** it comprises means of braking including a resistive element for the dissipation of the electrical energy regenerated by the in-wheel motors.

19. The vehicle according to Claim 1, **characterized in that** it has a roof having an active transpirant structure comprising a plurality of controlled-opening pores, for example, electrically or thermostatically actuated ones.

20. The vehicle according to Claim 1, **characterized in that** it has a body with an ovoid shape both in plan view and in side view.

21. The vehicle according to Claim 20, **characterized in that** provided on just one side or on both sides of the body is a door compartment, with doors of different widths that substantially open outwards like a book, said door compartment corresponding to the dimensions of the entire passenger compartment and not being interrupted by any upright so as to favour access both to the front seat and to the rear seat.

22. The vehicle according to Claim 1, **characterized in that** it comprises a device of assistance to steering of the front wheel of an electrical, or electromechanical, or pneumatic, or hydraulic type, or any combination of these technologies.

23. The vehicle according to Claim 1, **characterized in that** it has at least one side door that slides open upwards, to reduce the space necessary for parking.

24. The vehicle according to Claim 1, **characterized in that** each driving wheel is equipped with an array of accumulators of its own.

25. The vehicle according to Claim 24, **characterized in that** said arrays of accumulators are not connected electrically to one another.

26. The vehicle according to Claim 3, **characterized in that** the in-wheel motors are of a type chosen from among axial-flux, transverse-flux, radial-flux, and reluctance in-wheel motors.

27. The vehicle according to Claim 26, **characterized in that** the in-wheel motors contain permanent magnets.

28. The vehicle according to Claim 4, **characterized in that** the electric motors at the two sides of each wheel present different characteristics, for example, as regards power, and/or speed, and/or torque, and/or number of magnetic poles.

29. The vehicle according to Claim 3, **characterized in that** the electric motors of the two wheels present different characteristics, for example, as regards power, and/or speed, and/or torque, and/or number of magnetic poles.

30. The vehicle according to Claim 1, **characterized in that** it has a main chassis made of composite material or of aluminium box section, and a bodywork made of polycarbonate or nanocomposite material of the type containing a percentage of fillers of montmorillonite material.

31. The vehicle according to Claim 1, **characterized in that** it presents a plurality of light sources arranged according to a logarithmic spiral of the Fibonacci-series type.

32. The vehicle according to Claim 1, **characterized in that** the electric motors (M1, M2) associated to the front and rear wheels (3, 4) are each supplied by a respective array of accumulators, and **in that** said array of accumulators are coupled to an electronic unit for fast recharging from the electric-power mains via local accumulation racks with high power-density elements, such as supercapacitors, and/or flywheels.

33. The vehicle according to Claim 1, **characterized in that** connected to the electric motors (M1, M2) associated to the front and rear wheels (3, 4) are means for supply with renewable sources, such as wind-power sources or photovoltaic or thermo-electric sources.

34. The vehicle according to Claim 30, **characterized in that** the surface of the bodywork is coated with photovoltaic solar cells or solar cells of the thermo-electric type.

**35.** The vehicle according to Claim 30, **characterized in that** it has windows equipped with semitransparent photovoltaic film.

**36.** The vehicle according to Claim 13, **characterized in that** it comprises feedback mechanisms for actuation, by means of said active suspensions, of balancing of the load on the side wheels, for stabilizing the vehicle when curving and in the case of gusts of side wind.

**37.** The vehicle according to Claim 1, **characterized in that** the front and rear wheels (3, 4) can be steered through 90° and the side wheels can be raised for parking in restricted areas.

**38.** The vehicle according to Claim 1, **characterized in that** it has a width sufficiently small to enable an action of balancing by the driver by movement of his body, as for a two-wheeled vehicle.

## Patentansprüche

**1.** Fahrzeug mit vier Rädern, die an den Eckpunkten eines Rhombus angeordnet sind, nämlich ein zentrales Frontrad (3), das ein gelenktes Rad ist, ein zentrales Hinterrad (4) und zwei Seitenräder, die eine gemeinsame Achse (6) haben, die in einer Position in Längsrichtung gesehen zwischen den Achsen (7, 8) der Vorder- und Hinterräder (3, 4) angeordnet sind, wobei die Kombination der folgenden weiteren Eigenschaften vorgesehen sind:

- das Vorderrad (3) und/oder das Hinterrad (4) sind angetriebene Räder,
- der Antrieb der Vorder- und Hinterräder (3, 4) wird erreicht mittels entsprechender elektrischer Motoren (M1, M2), die direkt zugeordnet sind zu den Vorder- und Hinterrädern (3, 4),
- das Fahrzeug ist ausgestattet mit einem oder mehreren Sitzen (9, 10), die in Reihe in der zentralen Längsrichtung des Fahrzeugs angeordnet sind,
- **dadurch gekennzeichnet, dass** das Verhältnis L/H zwischen der Länge und der Höhe des Kraftfahrzeugs, das Verhältnis H/W zwischen der Höhe des Fahrzeugs und der Distanz zwischen den beiden Seitenrädern (5), und das Verhältnis AC/AB zwischen der Distanz zwischen der Achse des Frontrads und der Achse des Hinterrads (3, 4) und der Distanz zwischen der Achse des Vorderrads (3) und der Achse der Seitenräder (5) entsprechen alle im Wesentlichen dem goldenen Schnitt:

$$\phi = \frac{1 + \sqrt{5}}{2}$$

mit einer Toleranz von ± 10 %.

**2.** Fahrzeug nach Anspruch 1, **dadurch gekennzeichnet, dass** es aufgrund der Anordnung der Sitze in Tandem-Art eine maximale Breite von weniger als 130 cm hat, welche ermöglicht, einen hohen Grad an Komfort zu erreichen, und die Nachteile des Kurvenfahrverhaltens bei Fahrzeugen mit Rädern, die in rhomboidischer Konfiguration angeordnet sind, die eine Breite von mehr als 130 cm aufweist, zu bewältigen.

**3.** Fahrzeug nach Anspruch 1, **dadurch gekennzeichnet, dass** jedem der Vorder- und Hinterräder (3, 4) ein elektrischer Motor vom Typ eines im Rad angeordneten Motors zugeordnet ist.

**4.** Fahrzeug nach Anspruch 1, **dadurch gekennzeichnet, dass** jedem der Vorder- und Hinterräder (3, 4) zwei koaxiale elektrische Motoren zugeordnet sind, die an beiden Seiten des Rades angeordnet sind.

**5.** Fahrzeug nach Anspruch 1, **dadurch gekennzeichnet, dass** die elektrischen Motoren (M1, M2), zugeordnet den Vorder- und Hinterrädern (3, 4), gesteuert werden durch ein elektronisches Steuersystem (13), das gestaltet ist, um das regenerative Bremsen der Motoren mit Rückgewinnung der kinetischen Energie des Fahrzeugs während des Bremsens zu steuern.

**6.** Fahrzeug nach Anspruch 1, **dadurch gekennzeichnet, dass** auch das Hinterrad (4) ein gelenktes Rad ist.

**7.** Fahrzeug nach Anspruch 6, **dadurch gekennzeichnet, dass** das hintere gelenkte Rad (4) gesteuert wird von einem aktiven Steuersystem.

**8.** Fahrzeug nach Anspruch 6, **dadurch gekennzeichnet, dass** das hintere gelenkte Rad (4) ausgestattet ist mit einem passiven Steuersystem.

**9.** Fahrzeug nach Anspruch 1, **dadurch gekennzeichnet, dass** das gelenkte Vorderrad (3) durch ein Steuersystem auf mechanische Weise gesteuert wird.

**10.** Fahrzeug nach Anspruch 9, **dadurch gekennzeichnet, dass** das gelenkte Vorderrad (3) durch ein mechanisches System mit einer Steuersäule gesteuert wird.

**11.** Fahrzeug nach Anspruch 9, **dadurch gekennzeich-**

**net, dass** das gelenkte Vorderrad (3) durch ein mechanisches System mit Bowdenzügen gesteuert wird.

12. Fahrzeug nach Anspruch 1, **dadurch gekennzeichnet, dass** das gelenkte Vorderrad (3) durch ein Steuersystem vom Typ Steuern-durch-Draht gesteuert wird.

13. Fahrzeug nach Anspruch 1, **dadurch gekennzeichnet, dass** es ausgestattet ist mit aktiven Aufhängungen und mit aktiver Steuerung der Nick- und Rollbewegungen des Körpers des Fahrzeugs.

14. Fahrzeug nach Anspruch 13, **dadurch gekennzeichnet, dass** es ausgestattet ist mit einem System zur Trägheitskontrolle für eine aktive Kontrolle der Nick- und Rollbewegungen des Körpers des Fahrzeugs.

15. Fahrzeug nach Anspruch 1, **dadurch gekennzeichnet, dass** es ausgestattet ist mit einem Hybrid-Antrieb, der auch eine Wärmekraftmaschine von dem Typ einschließt, in welchem die Maschine auch mit einem oder mehreren Rädern verbunden ist, oder auch des Typs, in dem die Wärmekraftmaschine nur zum Laden der Batterie zur Versorgung der elektrischen Motoren benutzt wird.

16. Fahrzeug nach Anspruch 4, **dadurch gekennzeichnet, dass** es darüber hinaus mit mechanischen Bremsen ausgestattet ist und dass das vorher genannte Steuersystem gestaltet ist, um die Bremsen unterhalb eines Schwellenwerts der Geschwindigkeit des Kraftfahrzeugs zu aktivieren.

17. Fahrzeug nach Anspruch 16, **dadurch gekennzeichnet, dass** mechanische Bremsen den Seitenrädern (5) zugeordnet sind.

18. Fahrzeug nach Anspruch 16 oder 17, **dadurch gekennzeichnet, dass** es Bremsmittel umfasst, die ein Widerstandselement zur Abführung der elektrischen Energie einschließen, die von den im Rad eingebauten Motoren wiedererzeugt werden.

19. Fahrzeug nach Anspruch 1, **dadurch gekennzeichnet, dass** es ein Dach aufweist, welches eine aktive transpirierende Struktur hat, welches eine Mehrzahl von gesteuerten offenen Poren umfasst, z.B. elektrisch oder thermostatisch betätigt.

20. Fahrzeug nach Anspruch 1, **dadurch gekennzeichnet, dass** es sowohl in ebener Ansicht als auch in Seitenansicht einen Körper mit einer eiförmigen Form hat.

21. Fahrzeug nach Anspruch 20, **dadurch gekenn-**

**zeichnet, dass** gerade auf einer Seite oder auf beiden Seiten des Körpers eine Türabteilung vorgesehen ist mit Türen verschiedener Breiten, die im Wesentlichen nach außen öffnen wie ein Buch, wobei die Türabteilung den Abmessungen des gesamten Passagierabteils entspricht und nicht unterbrochen wird durch irgendeinen Pfosten, so dass der Zugang sowohl zu dem Vordersitz als auch zu dem Hintersitz begünstigt wird.

22. Fahrzeug nach Anspruch 1, **dadurch gekennzeichnet, dass** er ein Hilfsgerät zum Steuern des Vorderrads aufweist, das vom elektrischen oder elektromechanischen oder pneumatischen oder hydraulischen Typ ist, oder irgendeine Kombination dieser Technologien.

23. Fahrzeug nach Anspruch 1, **dadurch gekennzeichnet, dass** es wenigstens eine Seitentür hat, die zum Öffnen aufwärts gleitet, um den nötigen Raum zum Parken zu reduzieren.

24. Fahrzeug nach Anspruch 1, **dadurch gekennzeichnet, dass** jedes angetriebene Rad mit einer eigenen Reihe von Akkumulatoren ausgestattet ist.

25. Fahrzeug nach Anspruch 24, **dadurch gekennzeichnet, dass** diese Reihen von Akkumulatoren nicht elektrisch miteinander verbunden sind.

26. Fahrzeug nach Anspruch 3, **dadurch gekennzeichnet, dass** die im Rad angeordneten Motoren von einem Typ sind, der ausgewählt ist aus in einem Rad untergebrachten Motoren mit Axialkraftfluss, Transversalkraftfluss, Radialkraftfluss und Reluktanz.

27. Fahrzeug nach Anspruch 26, **dadurch gekennzeichnet, dass** die im Rad angeordneten Motoren Permanentmagnete enthalten.

28. Fahrzeug nach Anspruch 4, **dadurch gekennzeichnet, dass** die elektrischen Motoren auf beiden Seiten jedes Rads verschiedene Eigenschaften besitzen, z.B. in Bezug auf Leistung und/oder Geschwindigkeit und/oder Drehmoment und/oder Anzahl der magnetischen Pole.

29. Fahrzeug nach Anspruch 3, **dadurch gekennzeichnet, dass** die elektrischen Motoren der beiden Räder verschiedene Eigenschaften aufweisen, z.B. in Bezug auf Leistung und/oder Geschwindigkeit und/oder Drehmoment und/oder Anzahl der magnetischen Pole.

30. Fahrzeug nach Anspruch 1, **dadurch gekennzeichnet, dass** es ein Hauptfahrgestell, das aus Verbundmaterial oder aus einem Aluminium-Kastenprofil hergestellt ist, und einen Fahrzeugaufbau hat, der aus Polykarbonaten oder Nanoverbundmaterial des Typs hergestellt ist, der einen Prozentsatz aus Füllmittel aus Montmorillonit-Material enthält.

**31.** Fahrzeug nach Anspruch 1, **dadurch gekennzeichnet, dass** es eine Mehrzahl von Lichtquellen besitzt, die einer logarithmischen Spirale des Fibonacci-Reihentyps entspricht.

**32.** Fahrzeug nach Anspruch 1, **dadurch gekennzeichnet, dass** die elektrischen Motoren (M1, M2) den Vorder- und Hinterrädern (3, 4) zugeordnet sind, welche jeweils durch eine entsprechende Reihe von Akkumulatoren versorgt sind, und dass die Reihe von Akkumulatoren an eine elektronische Einheit zum schnellen Aufladen vom elektrischen Stromnetz über örtliche Akkumulationsgestelle mit hohen Leistungsdichteelementen gekoppelt ist, wie z.B. Superkondensatoren und/oder Schwungrädern.

**33.** Fahrzeug nach Anspruch 1, **dadurch gekennzeichnet, dass** mit den elektrischen Motoren (M1, M2) Mittel verbunden sind, die den Vorder- und Hinterrädern (3, 4) zugeordnet sind zur Versorgung mit erneuerbaren Quellen, wie z.B. Windenergiequellen oder photovoltaischen oder thermoelektrischen Quellen, verbunden sind.

**34.** Fahrzeug nach Anspruch 30, **dadurch gekennzeichnet, dass** die Oberfläche des Fahrzeugaufbaus überzogen ist mit photovoltaischen Solarzellen oder Solarzellen des thermoelektrischen Typs.

**35.** Fahrzeug nach Anspruch 30, **dadurch gekennzeichnet, dass** es mit Fenstern mit semi-transparentem photovoltaischem Film ausgestattet ist.

**36.** Fahrzeug nach Anspruch 13, **dadurch gekennzeichnet, dass** es Rückkopplungsmechanismen zum Betätigen mittels der aktiven Aufhängungen zum Balancieren der Last auf den Seitenrädern zum Stabilisieren des Fahrzeugs beim Fahren um die Kurve im Falle von Seitenwindenböen umfasst.

**37.** Fahrzeug nach Anspruch 1, **dadurch gekennzeichnet, dass** die Vorder- und Hinterräder (3, 4) durch 90° gesteuert werden können und die Seitenräder in eingeschränkten Bereichen zum Parken angehoben werden können.

**38.** Fahrzeug nach Anspruch 1, **dadurch gekennzeichnet, dass** es eine ausreichend geringe Breite hat, um eine Balanceaktion durch den Fahrer mittels Körperbewegung zu ermöglichen, wie für ein Zweirad-Fahrzeug.

**Revendications**

**1.** Véhicule ayant quatre roues disposées aux sommets d'un losange, à savoir une roue avant centrale (3), qui est une roue directrice, une roue arrière centrale (4), et deux roues latérales ayant un essieu commun (6) situé à une position longitudinalement intermédiaire entre les essieux (7, 8) des roues avant et arrière (3, 4), dans lequel il est prévu la combinaison des caractéristiques supplémentaires suivantes :

- la roue avant (3) et/ou la roue arrière (4) sont des roues motrices,
- l'entraînement des roues avant et arrière (3, 4) est obtenu au moyen de moteurs électriques respectifs (M1, M2) directement associés aux roues avant et arrière (3, 4),
- le véhicule est pourvu d'un ou plusieurs sièges (9, 10) disposés en ligne dans la direction centrale longitudinale du véhicule,

**caractérisé en ce que** le rapport L/H entre la longueur et la hauteur du véhicule à moteur, le rapport H/W entre la hauteur du véhicule et la distance entre les deux roues latérales (5), et le rapport AC/AB entre la distance entre les essieux des roues avant et arrière (3, 4) et la distance entre l'essieu de la roue avant (3) et l'essieu des roues latérales (5) sont tous essentiellement égaux à la section dorée :

$$\phi = \frac{1 + \sqrt{5}}{2}$$

avec une tolérance de $\pm$ 10 %.

**2.** Véhicule selon la revendication 1, **caractérisé en ce que**, grâce à l'agencement des sièges en tandem, il a une largeur maximale inférieure à 130 cm, ce qui permet d'obtenir un haut degré de confort et de supprimer les problèmes de manoeuvrabilité dans les virages propres aux véhicules ayant un ensemble de roues à configuration en losange d'une largeur supérieure à 130 cm.

**3.** Véhicule selon la revendication 1, **caractérisé en ce qu'**un moteur électrique du type moteur-roue est associé à chacune des roues avant et arrière (3, 4) mentionnées ci-dessus.

**4.** Véhicule selon la revendication 1, **caractérisé en ce que** deux moteurs électriques coaxiaux, disposés de chaque côté de la roue respective, sont associés à chacune des roues avant et arrière (3, 4).

**5.** Véhicule selon la revendication 1, **caractérisé en**

ce que les moteurs électriques (M1, M2) associés aux roues avant et arrière (3, 4) sont commandés par un système de commande électronique (13) conçu pour commander un freinage régénératif desdits moteurs, avec récupération de l'énergie cinétique du véhicule pendant le freinage.

6. Véhicule selon la revendication 1, **caractérisé en ce que** la roue arrière (4) est aussi une roue directrice.

7. Véhicule selon la revendication 6, **caractérisé en ce que** la roue directrice arrière (4) est commandée par un système de direction active.

8. Véhicule selon la revendication 6, **caractérisé en ce que** la roue directrice arrière (4) est équipée d'un système de direction passive.

9. Véhicule selon la revendication 1, **caractérisé en ce que** la roue directrice avant (3) est commandée par un système de direction de type mécanique.

10. Véhicule selon la revendication 9, **caractérisé en ce que** la roue directrice avant (3) est commandée par un système mécanique par colonne de direction.

11. Véhicule selon la revendication 9, **caractérisé en ce que** la roue directrice avant (3) est commandée par un système mécanique par câbles Bowden.

12. Véhicule selon la revendication 1, **caractérisé en ce que** la roue directrice avant (3) est commandée par un système de direction du type direction par câble.

13. Véhicule selon la revendication 1, **caractérisé en ce qu'**il est pourvu de suspensions actives, avec une commande active des mouvements de tangage et de roulis du corps du véhicule.

14. Véhicule selon la revendication 13, **caractérisé en ce qu'**il est pourvu d'un système de commande inertielle, pour la commande active des mouvements de tangage et de roulis du corps du véhicule.

15. Véhicule selon la revendication 1, **caractérisé en ce qu'**il est pourvu d'un système de propulsion hybride comprenant également un moteur thermique, du type dans lequel ledit moteur est également couplé à une ou plusieurs roues, ou bien du type dans lequel le moteur thermique est utilisé uniquement pour charger la batterie servant à l'alimentation des moteurs électriques.

16. Véhicule selon la revendication 4, **caractérisé en ce qu'**il est également pourvu de freins mécaniques, et **en ce que** le système de commande mentionné ci-dessus est conçu pour actionner lesdits freins en dessous d'une valeur seuil de la vitesse du véhicule à moteur.

17. Véhicule selon la revendication 16, **caractérisé en ce que** des freins mécaniques sont associés aux roues latérales (5).

18. Véhicule selon la revendication 16 ou la revendication 17, **caractérisé en ce qu'**il comprend des moyens de freinage incluant un élément résistif pour la dissipation de l'énergie électrique régénérée par les moteurs-roue.

19. Véhicule selon la revendication 1, **caractérisé en ce qu'**il a un toit doté d'une structure transpirante active comprenant une pluralité de pores à ouverture commandée, par exemple des pores actionnés par des moyens électriques ou thermostatiques.

20. Véhicule selon la revendication 1, **caractérisé en ce qu'**il a une carrosserie de forme ovoïde tant en vue de dessus qu'en vue de côté.

21. Véhicule selon la revendication 20, **caractérisé en ce qu'**un compartiment portières est prévu sur un seul ou de chaque côté de la carrosserie, avec des portes de largeurs différentes s'ouvrant essentiellement vers l'extérieur à la manière d'un livre, ledit compartiment portières correspondant aux dimensions de tout le compartiment passagers et n'étant interrompu par aucun montant afin de favoriser l'accès au siège avant ainsi qu'au siège arrière.

22. Véhicule selon la revendication 1, **caractérisé en ce qu'**il comprend un dispositif de direction assistée de la roue avant d'un type électrique, ou électromécanique, ou pneumatique, ou hydraulique, ou toute combinaison de ces technologies.

23. Véhicule selon la revendication 1, **caractérisé en ce qu'**il a au moins une portière latérale qui s'ouvre en coulissant vers le haut, afin de réduire l'espace nécessaire pour le stationnement.

24. Véhicule selon la revendication 1, **caractérisé en ce que** chaque roue motrice est équipée de son propre ensemble d'accumulateurs.

25. Véhicule selon la revendication 24**, caractérisé en ce que** lesdits ensembles d'accumulateurs ne sont pas connectés électriquement entre eux.

26. Véhicule selon la revendication 3, **caractérisé en ce que** les moteurs-roue sont d'un type choisi parmi les moteurs-roue à flux axial, à flux transversal, à flux radial et à reluctance.

**27.** Véhicule selon la revendication 26, **caractérisé en ce que** les moteurs-roue contiennent des aimants permanents.

**28.** Véhicule selon la revendication 4, **caractérisé en ce que** les moteurs électriques situés des deux côtés de chaque roue présentent des caractéristiques différentes, par exemple en ce qui concerne la puissance, et/ou la vitesse, et/ou le couple, et/ou le nombre de pôles magnétiques.

**29.** Véhicule selon la revendication 3, **caractérisé en ce que** les moteurs électriques des deux roues présentent des caractéristiques différentes, par exemple en ce qui concerne la puissance, et/ou la vitesse, et/ou le couple, et/ou le nombre de pôles magnétiques.

**30.** Véhicule selon la revendication 1, **caractérisé en ce qu'**il a un châssis principal constitué d'une section en caisson en un matériau composite ou en aluminium, et une carrosserie constituée de polycarbonate ou d'un matériau nanocomposite du type contenant une proportion de matières de charge à base de montmorillonite.

**31.** Véhicule selon la revendication 1, **caractérisé en ce qu'**il présente une pluralité de sources lumineuses disposées selon une spirale logarithmique du type Série de Fibonacci.

**32.** Véhicule selon la revendication 1, **caractérisé en ce que** les moteurs électriques (M1, M2) associés aux roues avant et arrière (3, 4) sont chacun alimentés par un ensemble d'accumulateurs respectif, et **en ce que** lesdits ensembles d'accumulateurs sont couplés à une unité électronique pour une recharge rapide à partir du réseau électrique via des chargeurs d'accumulateurs locaux ayant des éléments à haute densité de puissance, tels que supercondensateurs et/ou des volants.

**33.** Véhicule selon la revendication 1, **caractérisé en ce que** des moyens d'alimentation à sources renouvelables, telles que des sources d'énergie éolienne ou des sources photovoltaïques ou thermoélectriques, sont connectés aux moteurs électriques (M1, M2) associés aux roues avant et arrière (3, 4).

**34.** Véhicule selon la revendication 30, **caractérisé en ce que** la surface de la carrosserie est revêtue de cellules solaires photovoltaïques ou de cellules solaires du type thermoélectrique.

**35.** Véhicule selon la revendication 30, **caractérisé en ce qu'**il a des fenêtres équipées d'un film photovoltaïque semi-transparent.

**36.** Véhicule selon la revendication 13, **caractérisé en ce qu'**il comprend des mécanismes d'asservissement pour l'actionnement, au moyen desdites suspensions actives, de l'équilibrage de la charge sur les roues latérales, pour stabiliser le véhicule dans les virages et en cas de rafales de vent latéral.

**37.** Véhicule selon la revendication 1, **caractérisé en ce que** les roues avant et arrière (3, 4) peuvent être dirigées sur une plage angulaire de 90° et les roues latérales peuvent être soulevées pour un stationnement dans des zones réglementées.

**38.** Véhicule selon la revendication 1, **caractérisé en ce qu'**il a une largeur suffisamment petite pour permettre une action d'équilibrage par le conducteur par déplacement de son corps, comme pour un véhicule à deux roues.

FIG. 1

EP 1 982 905 B1

FIG. 2

EP 1 982 905 B1

# FIG. 3

EP 1 982 905 B1

FIG. 4

FIG. 5

EP 1 982 905 B1

EP 1 982 905 B1

FIG. 6

21

# FIG. 7

EP 1 982 905 B1

# FIG. 8

EP 1 982 905 B1

FIG. 9

EP 1 982 905 B1

FIG. 10

## FIG. 11

FIG. 13

F

1800
1600
1400
1200
1000
800
600
400
200
0

0 1 2 3 4 5 6 7 8 $\delta$

FIG. 12

$\delta$

$\omega$

FIG. 14

G $F_c$

$h_G$

$Q_d$

$Q_d$

FIG. 15

FIG. 16

FIG. 17

EP 1 982 905 B1

**EP 1 982 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4313511 A
- WO 2005021360 A
- US 1426975 A
- GB 889593 A
- US 3828876 A
- EP 07425177 A